# EUROPÄISCHE PATENTSCHRIFT

(11) **EP 3 027 338 B1**
(45) Veröffentlichungstag und Bekanntmachung des Hinweises auf die Patenterteilung: **15.01.2020**
(21) Anmeldenummer: 14786784.0
(22) Anmeldetag: 24.07.2014
(51) Int. Cl.: B21H 7/18, B24B 39/04

(54) **WALZWERKZEUG**
ROLLING TOOL
OUTIL DE LAMINAGE

(30) Priorität: 27.07.2013 DE 202013006779 U
(43) Veröffentlichungstag der Anmeldung: 08.06.2016
(73) Patentinhaber: Hegenscheidt-MFD GmbH & Co. KG, 41812 Erkelenz (DE)
(72) Erfinder: HEIMANN, Alfred, 52078 Aachen (DE); MALDANER, Jandrey, 52159 Roetgen (DE)
(74) Vertreter: Patentanwälte Findeisen Neumann Scheit Partnerschaft mbB
(86) Internationale Anmeldenummer: PCT/DE2014/000392
(87) Internationale Veröffentlichungsnummer: WO 2015/014337

(56) Entgegenhaltungen:
- EP-A1- 1 262 280
- DE-A1- 2 609 787
- DE-A1-102007 003 772
- DE-A1-102007 028 888
- DE-B4-102006 024 715
- DE-U1-202007 016 473

## Beschreibung

Die Erfindung betrifft ein Walzwerkzeug zum Glattwalzen von Lagerflächen einer um eine Kurbelwellenachse drehbaren Kurbelwelle mit einem Glattwalzkopf und einem Stützrollenkopf, wobei der Glattwalzkopf eine Glattwalzrolle und eine in einem Glattwalzkopfgehäuse gelagerte und die Glattwalzrolle abstützende Druckrolle aufweist und wobei der Stützrollenkopf zwei in einem Stützrollengehäuse gelagerte Stützrollen aufweist, mit denen die Kurbelwelle gegen eine über die Glattwalzrolle auf die Kurbelwelle wirkende Walzkraft abstützbar ist.

Die Entwicklung von Verbrennungsmotoren, beispielsweise Pkw-Motoren, hat zu kleineren Motoren, kleineren Lagern und höheren Belastungen der Kurbelwellen geführt. Hochbelastete Lager arbeiten teilweise in einem Mischreibungszustand, in dem eine aus Motorenöl ausgebildete Schmierschicht Kurbelwellenlagerflächen und Gegenlaufflächen nicht vollständig voneinander trennt. Das zur Reduzierung des Kraftstoffverbrauches eingeführte Start-Stopp-System stellt eine weitere Belastung für Lager dar. Durch hohe Formgenauigkeiten und geringe Oberflächenrauhigkeiten der Lagerflächen können bestehende erhöhte Anforderungen an die Lager erfüllt werden.

In der Endbearbeitung von Lagersitzen von Kurbelwellen wird im Stand der Technik meist das Bandfinishen eingesetzt, bei dem ein in Öl bewegtes Polierband, dessen Oberfläche Schneidmittel aufweist, Material von Lagerflächen abträgt und dabei die Oberflächengüte der Lagerflächen verbessert. Problematisch an diesem Verfahren sind die Entsorgung des verschmutzten Öles und der Verschleiß des Polierbandes.

Die EP 1 262 280 und DE 10 2007 003 772 offenbaren Walzwerkzeuge zum Glattwalzen von Lagerflächen.

Aus DE 10 2006 024 715 B4 ist ein Verfahren zur Bearbeitung der Lagersitze der Haupt- und Hublager von Kurbelwellen bekannt, bei dem zur Endbearbeitung von Lagerflächen ein Walzverfahren eingesetzt wird. Für dieses Verfahren kommen als Walzwerkzeuge ein Glattwalzkopf und ein Stützrollenkopf zum Einsatz, wobei der Glattwalzkopf eine Glattwalzrolle und eine in einem Glattwalzkopfgehäuse gelagerte und die Glattwalzrolle abstützende Druckrolle aufweist und wobei der Stützrollenkopf zwei in einem Stützrollengehäuse gelagerte Stützrollen aufweist, mit denen die Kurbelwelle beim Glattwalzen gegen eine über die Glattwalzrolle auf die Kurbelwelle wirkende Walzkraft abgestützt wird.

Dieses Walzverfahren ist im Vergleich zum Bandfinishen unter Öl ein umweltfreundliches Verfahren, da kein verschmutztes Öl anfällt. Zudem ist das Verfahren durch eine hohe Standzeit der Walzwerkzeuge auch kostengünstig. Im praktischen Einsatz des Glattwalzens wurden jedoch sporadisch auftretende axiale schraubenartige Bewegungen von Glattwalzrollen beobachtet, die Beschädigungen von Führungen der Glattwalzrolle und/oder der Kurbelwelle ergeben können.

Aufgabe der Erfindung ist es daher, ein Walzwerkzeug zu schaffen, bei dessen Anwendung für das Glattwalzen von Kurbelwellenlagern derartige Beschädigungen von Führungen der Glattwalzrolle oder der Kurbelwelle weitgehend ausgeschlossen sind oder zumindest noch seltener auftreten als bei Verwendung herkömmlicher Walzwerkzeuge.

Diese Aufgabe wird durch ein Walzwerkzeug nach dem Anspruch 1 gelöst.

Bei korrekter Ausrichtung des Walzwerkzeuges in Bezug auf die durch das Walzen zu bearbeitende Lagerfläche der Kurbelwelle sind die Kurbelwellenachse und die Rotationsachsen der Rollen des Walzwerkzeuges, das heißt der Glattwalzrolle, der Druckrolle und der beiden Stützrollen, parallel zueinander ausgerichtet und es treten an den Rollen keine unzulässig großen axialen Kräfte auf. Bei den zu bearbeitenden Lagerflächen kann es sich um die Lagersitze der Hauptlager und der Hub- bzw. der Pleuellager handeln. Es können aber auch andere Bereiche, beispielsweise Zapflagersitze an den Enden der Kurbelwelle oder Lagerflächen anderer Wellen glattgewalzt werden. Die Lagerflächen der Kurbelwelle haben eine zumindest annähernd zylindrische Form. Abweichend von geraden Zylindermantelflächen können aber auch leicht konvexe (ballige) oder leicht konkave Flächen vorgesehen sein. Die Hauptlager befinden sich fluchtend auf der Kurbelwellenachse, die Achsen der Pleuellager sind parallel zu der Kurbelwellenachse ausgerichtet und durch Kurbelwangen radial von der Kurbelwellenachse beabstandet.

In einem erfindungsgemäß ausgestalteten Walzwerkzeug ist die Glattwalzrolle in einem einstückig ausgebildeten Rollenkäfig geführt. In diesem Rollenkäfig haben die beiden Gleitflächen für axiale Stirnflächen der Glattwalzrolle und die beiden Gleitflächen für gegenüberliegende Bereiche der Mantelfläche der Glattwalzrolle eine präzise feste Ausrichtung zueinander. Justagetoleranzen, die bei mehrstückigen Führungen möglich sind, treten somit nicht auf. Der Rollenkäfig trägt folglich zu einer ordnungsgemäßen Ausrichtung der Glattwalzrolle durch eine korrekte und einfache Lagerung im Glattwalzkopf bei.

Weiterhin weist der Glattwalzkopf und der Stützrollenkopf eine Schwenkachse auf. Das heißt, das Rollengehäuse der beiden Köpfe ist schwenkbar gelagert. Die Rollengehäuse beider Köpfe sind schwenkbar, um Abweichungen der Orientierung der Köpfe in Bezug auf die Kurbelwelle zu korrigieren.

Der mit einer Schwenkachse ausgestattete Glattwalzkopf weist einen Glattwalzkopfrahmen auf, in dem das Glattwalzkopfgehäuse um eine zu der Kurbelwellenachse senkrechte und zu einer Tangente an eine Arbeitsseite der Glattwalzrolle parallele erste Schwenkachse schwenkbar gelagert ist. Als Arbeitsseite der Glattwalzrolle ist die Linie zu verstehen, die bei Verwendung des Walzwerkzeuges die Lagerfläche berührt. Bei einer beispielsweise horizontal ausgerichteten Kurbelwellenachse und einer parallel zu der Kurbelwellenachse vertikal über der Kurbelwelle angeordneten Glattwalzrolle ist die erste Schwenkachse eine horizontale Schwenkachse, um die die Glattwalzrolle schwenkbar und parallel zu der Kurbelwellenachse ausrichtbar ist. Die Ausrichtung um die erste Schwenkachse wird entweder vor dem Walzen fixiert oder sie stellt sich während des Walzens selbst ein.

Der Glattwalzkopfrahmen kann in einer vorteilhaften Ausführung in einem Werkzeugarm des Walzwerkzeugs anstelle eines bekannten Glattwalzkopfgehäuses gemäß dem Stand der Technik montiert werden.

Analog zum oben beschriebenen Glattwalzkopf ist auch der Stützrollenkopf schwenkbar ausgebildet, so dass die Rotationsachsen der Stützrollen parallel zu der Achse des zu bearbeitenden Kurbelwellenabschnittes ausgerichtet werden können. Optimal ausgerichtete Stützrollen können die Kurbelwelle optimal abstützen, ohne dass die bearbeiteten Kurbelwellen unzulässig deformiert werden. Im Stützrollenkopfgehäuse des Stützrollenkopfes sind zwei Stützrollen mit voneinander beabstandeten parallelen Rotationsachsen gelagert. Das Stützrollenkopfgehäuse ist wiederum in dem Stützrollenrahmen um eine zweite Schwenkachse und um eine dritte Schwenkachse schwenkbar gelagert. Die zweite Schwenkachse ist senkrecht zu der Kurbelwellenachse und parallel zu einer Tangente an eine Arbeitsseite der Glattwalzrolle ausgerichtet. Mit einem Schwenken um die zweite Schwenkachse wird eine Neigung beider Stützrollen gegenüber der Kurbelwellenachse beseitigt oder minimiert. Mit dem Schwenken um die dritte Schwenkachse wird die Ebene, in der sich die parallelen Rotationsachsen der Stützrollen befinden, so gedreht, dass die parallelen Rotationsachsen parallel zu der Kurbelwellenachse verlaufen. Das heißt, mit dem Schwenken um die dritte Schwenkachse wird ein Verkanten der Stützrollen gegenüber der Kurbelwelle beseitigt oder minimiert.

Die erste Schwenkachse "A" ist als eine durch die Kurbelwelle verlaufende Sekante ausgebildet, deren maximaler Abstand von einer Tangente an die Arbeitsseite der Glattwalzrolle kleiner als 10 Millimeter ist. In dieser Ausbildung steht der Glattwalzkopf weiter als in der zuerst beschriebenen Ausbildung über die zu bearbeitende Lagerfläche über. Dieser Überstand ist mit einer Hebelwirkung und einem vergrößerten die Schwenkbewegung verursachenden Drehmoment verbunden. Wegen des beschränkt verfügbaren Platzes im Walzwerkzeug ist der maximale Überstand auf etwa 10 Millimeter begrenzt.

Die zweite Schwenkachse "B" ist als eine durch die Kurbelwelle verlaufende Sekante ausgebildet, die durch Auflagepunkte oder nahe den Auflagepunkten der Kurbelwelle auf den Stützrollen verläuft. Unter "nahe" wird dabei eine Abweichung von wenigen, maximal etwa 10 Millimetern verstanden. Der Stützrollenkopf umschließt funktionsbedingt die Kurbelwelle am Ort der Abstützung teilweise. Ein weites Umschließen bewirkt durch eine Hebelwirkung ein sicheres Schwenken des Stützrollenkopfes. Folglich ist ein weites Umschließen bzw. Überragen anstrebenswert. Eine körperliche Begrenzung für den Längenbetrag des Überragens bildet der dem Stützrollenkopf gegenüberliegende Glattwalzkopf.

In einer weiteren Variante weist der Rollenkäfig eine streifenförmige Öffnung auf, deren Breite auf einer dem Glattwalzkopf abgewandten Seite des Rollenkäfigs kleiner ist als der Durchmesser der Glattwalzrolle. Die Glattwalzrolle ist hierbei durch den Rollenkäfig im Glattwalzkopf eingeschlossen. Dadurch wird unabhängig von der räumlichen Lage des Glattwalzkopfes ein ungewolltes Herausfallen der Glattwalzrolle verhindert. Zum Austauschen der Glattwalzrolle muss der Rollenkäfig demontiert und mit der neuen Glattwalzrolle neu montiert sowie justiert werden. Bei einer geeigneten Einbaulage des Glattwalzkopfes kann auch ein Rollenkäfig verwendet werden, in dessen streifenförmige Öffnung eine Glattwalzrolle ohne Demontage des Rollenkäfigs eingelegt werden kann. Beispielsweise weist der Rollenkäfig nur auf seiner unteren, neben der Kurbelwelle vorgesehenen Seite einen Vorsprung auf, der ein Herausfallen der Glattwalzrolle aus dem Glattwalzrollenkopf verhindert.

Der Glattwalzkopf und der Stützrollenkopf sind in einer vorteilhaften Ausgestaltung durch wenigstens ein Kupplungselement miteinander verbindbar. Die somit verbundenen Komponenten bilden eine mechanische Einheit mit einem festen räumlichen Bezug zueinander. Dadurch sind relative Positionstoleranzen zwischen dem Glattwalzkopf und dem Stützrollenkopf gering. Das Kupplungselement ist beispielsweise ein am Stützrollenkopf befestigter Bolzen, der zum Eingreifen in eine Zentrierbohrung im Glattwalzkopf ausgebildet ist. Das Walzwerkzeug ist in einer Ausgestaltung als ein zangenartiges, zwei durch ein Scharnier miteinander verbundene Werkzeugarme aufweisendes Werkzeug ausgebildet. Dabei ist an einem Werkzeugarm der Stützrollenkopf und am anderen Werkzeugarm der Glattwalzkopf befestigt. Das Scharnier und die Werkzeugarme dienen dabei als erste Kupplungselemente und der Bolzen als ein weiteres Kupplungselement. Als Kupplungselemente können beispielsweise auch Federn und Nuten vorgesehen werden.

Die Glattwalzrolle weist vorzugsweise eine zylindrische Form mit einem Durchmesser zwischen 1 mm und 20 mm auf und eine Länge, die größer als die Breite der Lagerfläche ist. Dünne zylindrische Rollen mit einem wenige Millimeter großen Durchmesser werden auch als Nadeln bezeichnet. Die gesamte Breite der Lagerfläche wird in einem Glattwalzverfahren in einem Arbeitsgang bearbeitet, wobei mit einer einzigen Kurbelwellenumdrehung und entsprechend einmaligem Glattwalzen glatte Lagerflächen erzeugt werden. Der seitliche Überstand der Glattwalzrolle über die Lagerfläche ist möglichst klein bemessen, da zwischen der Lagerfläche und den Kurbelwangen nur geringe Abstände vorhanden sind und in diesen Abständen Bewegungsfreiheiten für den Glattwalzkopf und axiale Führungen des Rollenkäfigs untergebracht werden müssen. Geringe Durchmesser der Glattwalzrolle werden beispielsweise dann gewählt, wenn für die Glattwalzrolle eine elastische Durchbiegung während des Glattwalzens vorgesehen ist.

Gemäß weiteren Ausgestaltungen weisen die Druckrolle und die Stützrollen entsprechend einer zylindrischen balligen oder konkaven Ausbildung der zu bearbeitenden Lagerfläche zylindrische konkave oder ballige Umfangsflächen auf. Die Lagerflächen haben visuell eine zylindrische Form, die auch konstruktiv zylindrisch konzipiert sein kann. In diesem Fall sind passend zu der Lagerfläche auch die Stützrollen und die Druckrolle zylindrisch konzipiert. Beispielsweise aus Gründen, die sich aus einem Lager-Schmierungskonzept ergeben, können die Lagerflächen auch ballig oder konvex ausgebildet sein. Diese Abweichungen von einer Zylindermantelfläche sind visuell kaum wahrnehmbar, da die Wölbungen regelmäßig sehr klein sind, beispielsweise 5 µm bei 20 mm Walzenbreite. Die Stützrollen und die Druckrolle haben in diesem Fall invers zu der Lagerfläche gewölbte Umfangsflächen, also konkav gewölbte Umfangsflächen bei balligen Lagerflächen oder konvex gewölbte Umfangsflächen bei konkav gewölbten Lagerflächen. Die Umfangsflächenkontur der Druckrolle wird dabei durch die Walzkraft auf die Glattwalzrolle übertragen, die sich in Anpassung an die Umfangsfläche der Druckrolle elastisch durchbiegt.

Für den Rollenkäfig wird vorzugsweise ein Material mit gutem Gleitvermögen verwendet, weil die Glattwalzrolle zeitweise an Berührungsflächen zum Rollenkäfig entlang gleitet. Durch ein gutes Gleitvermögen wird erreicht, dass der Rollenkäfig trotz dieser Berührung nur langsam verschlissen wird. Bronzen, ungehärtete und gehärtete Stähle sind hierfür geeignete Materialien. Es können aber auch andere Materialien und Beschichtungen eingesetzt werden, beispielsweise faserverstärkte Kunststoffe.

Die Glattwalzrolle besteht aus einem Material, dessen Härte über der der zu bearbeitenden Lagerfläche liegt. Dadurch werden Deformationen und Ermüdungen der Glattwalzrolle während des Glattwalzverfahrens vermieden. Die Glattwalzrolle kann zum Beispiel aus einem gehärteten Stahl oder aus einem Hartmetall bestehen. Es können aber auch andere Materialien und Beschichtungen, beispielsweise keramische, zum Einsatz kommen. Nachfolgend wird die Erfindung anhand der Zeichnung näher erläutert. Es zeigen:
- Fig. 1: einen Glattwalzkopf und einen Stützrollenkopf an einer Kurbelwelle
- Fig. 2: ein Walzwerkzeug
- Fig. 3: einen Glattwalzkopf in einer perspektivischen Ansicht
- Fig. 4: einen Rollenkäfig
- Fig. 5: eine Glattwalzrolle
- Fig. 6: einen Stützrollenkopf in einer ersten perspektivischen Ansicht
- Fig. 7: den Stützrollenkopf gemäß Fig. 6 in einer anderen Ansicht

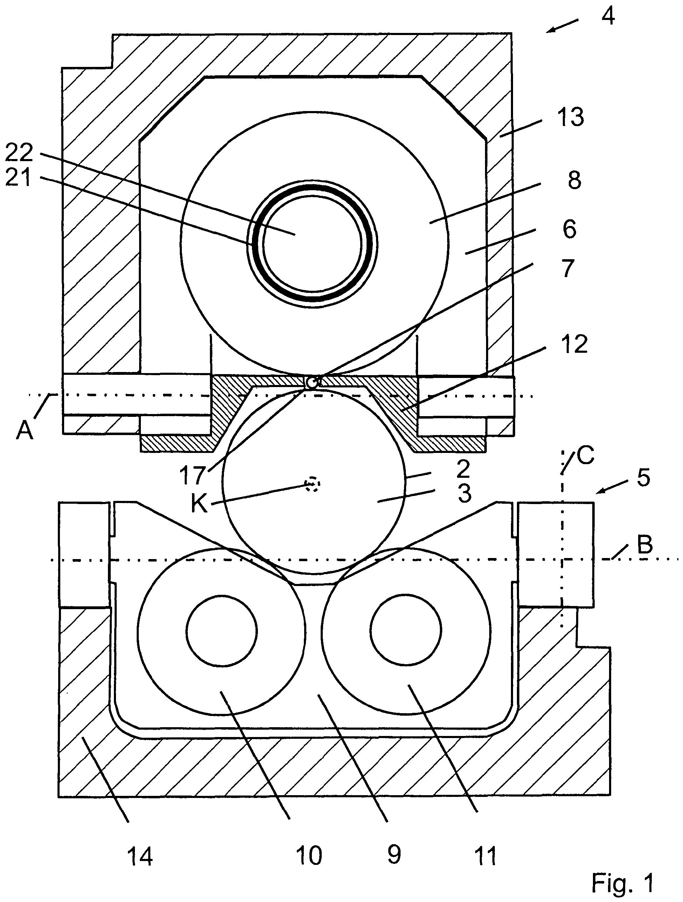

**Fig. 1** zeigt schematisch einen Glattwalzkopf 4 und einen Stützrollenkopf 5 an einer Kurbelwelle 3 in einem Querschnitt quer zu einer Kurbelwellenachse K einer Kurbelwelle 3. Bei einer dargestellten Lagerfläche 2 der Kurbelwelle 3 handelt es sich um einen Hauptlagersitz der Kurbelwelle 3. Mit dem Glattwalzkopf 4 können aber auch Pleuellager und Zapflager der Kurbelwelle 3 und sonstige Lager bearbeitet werden. Orthogonal zu der dargestellten Fläche sind der Glattwalzkopf 4 und der Stützrollenkopf 5 so schmal ausgebildet, dass zu den zwei an die Lagerfläche 2 anschließenden Kurbelwangen jeweils Abstände vorhanden sind. Der Stützrollenkopf 5 stützt die Kurbelwelle 3 gegen eine von dem Glattwalzkopf 4 über eine Glattwalzrolle 7 auf die Kurbelwelle 3 ausgeübte Walzkraft ab.

Der Glattwalzkopf 4 weist ein Glattwalzkopfgehäuse 6 auf, das in einem erfindungsgemäßen Walzwerkzeug 1 in einem Glattwalzkopfrahmen 13 um eine erste Schwenkachse A schwenkbar gelagert ist. Durch das Schwenken um die Schwenkachse A kann die Glattwalzrolle 7 parallel zu der Kurbelwellenachse K ausgerichtet werden. Im hier dargestellten Ausführungsbeispiel ist der Glattwalzkopf 4 selbsteinstellend, das heißt, das Glattwalzkopfgehäuse 6 stellt sich unter dem Einfluss der Walzkraft selbst so ein, dass die Glattwalzrolle 7 und ihre Achse parallel zu der Kurbelwellenachse K ausgerichtet sind. In nicht dargestellten Ausführungsbeispielen wird der Glattwalzkopf 4 vor dem Walzen in einem optimalen Winkel in Bezug auf die erste Schwenkachse A fixiert.

Die Druckrolle 8 ist in dem Glattwalzkopfgehäuse 6 von einem nur schematisch dargestellten Zylinderrollenlager 21 auf einem Lagerbolzen 22 gelagert. Über die Druckrolle 8 wird die Walzkraft auf die Glattwalzrolle 7 und von dieser auf die zu bearbeitende Lagerfläche 2 übertragen. Dabei wird die Lagerfläche 2 plastisch verformt, indem Material von Erhebungen in Vertiefungen eines Rauheitsprofils der Lagerfläche 2 fließt. Auf diese Weise wird das Rauheitsprofil der Lagerfläche 2 eingeebnet und die Lagerfläche 2 erhält entsprechend eine glatte Oberfläche. Durch die glattgewalzten Lagerflächen 2 braucht ein Verbrennungsmotor mit einer so bearbeiteten Kurbelwelle nur verkürzt eingefahren werden und die Lebensdauer des Motors wird entsprechend erhöht.

Im dargestellten Ausführungsbeispiel ist die Glattwalzrolle 7 in einem aus einem ungehärteten Stahl bestehenden Rollenkäfig 12 mit einer streifenförmigen Öffnung 17, deren Breite auf ihrer sichtbaren, von dem Glattwalzkopf 4 abgewandten Seite kleiner als der Durchmesser der Glattwalzrolle 7 ist, allseitig geführt. Der Rollenkäfig 12 führt die Glattwalzrolle 7 also axial an beiden Enden sowie umfangsseitig an zwei gegenüberliegenden Oberflächenbereichen. Die längeren Seitenwände in der streifenförmigen Öffnung 17, die als Gleitflächen für die Mantelfläche der Glattwalzrolle 7 dienen, sind als Hohlkehle ausgebildet. Dadurch wird die Glattwalzrolle 7 auch gegen ihre Schwerkraft vom Rollenkäfig 12 gehalten, wenn sich die Glattwalzrolle 7 auf einer räumlich unteren Seite des Glattwalzkopfes 4 befindet. Zum Auswechseln der Glattwalzrolle 7 muss folglich entweder der Rollenkäfig 12 oder ein Deckel des Glattwalzkopfgehäuses 6 und die Druckrolle 8 demontiert werden. In einer nicht dargestellten Ausführung weist der Rollenkäfig 12 nur an einer Seitenwand der streifenförmigen Öffnung 17 eine Hohlkehle auf und diese Seitenwand ist räumlich unten vorgesehen, so dass die Glattwalzrolle 7 auf der Seitenwand mit Hohlkehle aufliegen und an der gegenüberliegenden Seitenwand der streifenförmigen Öffnung 17 entnommen werden kann.

Der Stützrollenkopf 5 dient in der dargestellten Anordnung als Lagerbock für die Kurbelwelle 3 während des Glattwalzens, der eine Gegenkraft für die Walzkraft bereitstellt. Dazu liegt die Lagerfläche 2 der Kurbelwelle 3 an zwei im Stützrollengehäuse 9 gelagerten Stützrollen 10 und 11 an. Das Stützrollengehäuse 9 ist in einem Stützrollenrahmen 14, mit dem der Stützrollenkopf 5 befestigbar ist, zweifach schwenkbar gelagert. Mit einer Ausrichtung des Stützrollenkopfes 5 um eine zweite Schwenkachse B kann eine Neigung einer Ebene, in der die Drehachsen der Stützrollen 10 und 11 liegen, bezüglich der Kurbelwellenachse K korrigiert werden. Mit der Drehung um eine dritte Schwenkachse C kann hingegen die Ebene, in der die Drehachsen der Stützrollen 10 und 11 liegen, in sich gedreht werden, um ein Verkanten der Drehachsen der Stützrollen 10 und11 bezüglich der Kurbelwellenachse K zu korrigieren. Im dargestellten Ausführungsbeispiel ist diese dritte Schwenkachse C nicht zentral, die Kurbelwellenachse K schneidend im Stützrollenkopf 5 angeordnet, sondern seitlich. Dieser seitliche Versatz ist unproblematisch, da er bei einer Positionierung des Stützrollenkopfes 5 an der Kurbelwelle 3 berücksichtigt und korrigiert werden kann.

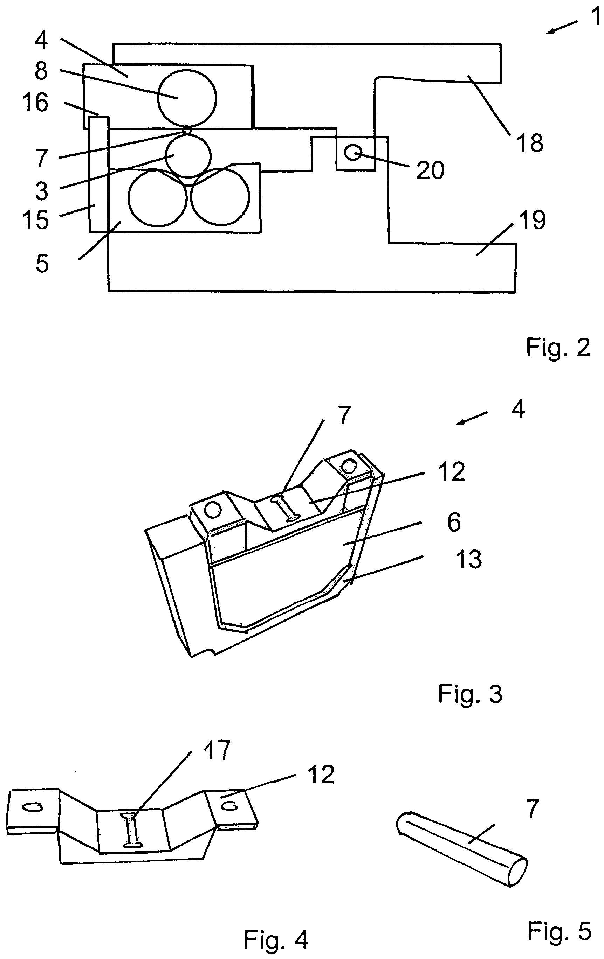

**Fig.** 2 zeigt schematisch ein Ausführungsbeispiel eines erfindungsgemäßen Walzwerkzeugs 1. Der aus Fig. 1 ersichtliche Glattwalzkopf 4 und Stützrollenkopf 5 sind hier mit lediglich wenigen Details dargestellt, um die Übersichtlichkeit nicht unnötig zu beeinträchtigen. Das Walzwerkzeug 1 ist zangenartig unter Verwendung von zwei mit einem Scharnier 20 verbundenen Werkzeugarmen 18 und 19 zusammengesetzt. An diesen Werkzeugarmen 18 und 19 sind der Glattwalzkopf 4 bzw. der Stützrollenkopf 5 befestigt. Die Werkzeugarme 18 und 19 sowie das Scharnier 20 dienen dabei als Kupplungselemente, die den Glattwalzkopf 4 und den Stützrollenkopf 5 mechanisch miteinander verbinden. Die Stützrollen 10 und 11 sowie die Glattwalzrolle 7, die sich an der Druckrolle 8 abstützt, schließen die Kurbelwelle 3 an dem zu walzenden Lagersitz ein. Am Stützrollenkopf 5 ist im dargestellten Ausführungsbeispiel ein Bolzen 15 als zusätzliches Kupplungselement befestigt, der in eine passende Zentrierbohrung 16 im Glattwalzkopf 4 eingreift. Somit wird eine hohe Verwindungssteifigkeit erzielt. In alternativen Ausführungen kann das Walzwerkzeug auch ohne zangenartige Werkzeugarme 18 und 19 aufgebaut werden. Dann ist beispielsweise der Stützrollenkopf 5 als ein feststehender Lagerbock ausgebildet und der Glattwalzkopf 4 wird bezüglich des Stützrollenkopfes 5 ausgerichtet.

**Fig. 3** zeigt eine Ausführung eines Glattwalzkopfes 4 in einer räumlichen Perspektive. Hierbei ist das Glattwalzkopfgehäuse 6 in einem visuell nur schwer erkennbaren kleinen Winkel gegenüber dem Glattwalzkopfrahmen 13 verschwenkt. Durch die Schwenkbarkeit kann die vom Rollenkäfig 12 gehaltene Glattwalzrolle 7 parallel zur Kurbelwellenachse K der zu bearbeitenden Kurbelwelle 3 ausgerichtet werden. Der Rollenkäfig 12 ist in **Fig. 4** und die Glattwalzrolle 7 ist in **Fig. 5** separat gezeigt. Die streifenförmige Öffnung 17 ist auf der in Fig. 4 sichtbaren Seite schmaler als der Durchmesser der passenden, in Fig. 5 gezeigten Glattwalzrolle 7. Dadurch kann der in Fig. 3 gezeigte Glattwalzkopf 4 auch in einer Lage verwendet werden, in der sich die Glattwalzrolle 7 an der unteren Seite des Glattwalzkopfes 4 befindet.

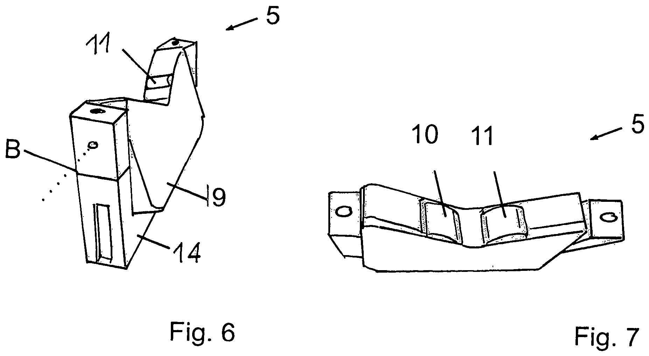

**Fig. 6** und **Fig. 7** zeigen einen Stützrollenkopf 5 in zwei verschiedenen perspektivischen Ansichten bei denen die Schwenkbarkeit des Stützrollengehäuses 9 gegenüber dem Stützrollenrahmen 14 um die zweite Schwenkachse B durch große Auslenkungen veranschaulicht ist.

### Bezugszeichenliste

- 1: Walzwerkzeug
- 2: Lagerfläche
- 3: Kurbelwelle
- 4: Glattwalzkopf
- 5: Stützrollenkopf
- 6: Glattwalzkopfgehäuse
- 7: Glattwalzrolle
- 8: Druckrolle
- 9: Stützrollengehäuse
- 10: Stützrolle
- 11: Stützrolle
- 12: Rollenkäfig
- 13: Glattwalzkopfrahmen
- 14: Stützrollenrahmen
- 15: Bolzen
- 16: Zentrierbohrung
- 17: streifenförmige Öffnung
- 18: Werkzeugarm
- 19: Werkzeugarm
- 20: Scharnier
- 21: Zylinderrollenlager
- 22: Lagerbolzen

- K: Kurbelwellenachse
- A: erste Schwenkachse
- B: zweite Schwenkachse
- C: dritte Schwenkachse

## Patentansprüche

1. Walzwerkzeug (1) zum Glattwalzen von Lagerflächen (2) einer um eine Kurbelwellenachse (K) drehbaren Kurbelwelle (3) mit einem Glattwalzkopf (4) und einem Stützrollenkopf (5), wobei der Glattwalzkopf (4) eine Glattwalzrolle (7) und eine in einem Glattwalzkopfgehäuse (6) gelagerte und die Glattwalzrolle (7) abstützende Druckrolle (8) aufweist, wobei der Stützrollenkopf (5) zwei in einem Stützrollengehäuse (9) gelagerte Stützrollen (10; 11) aufweist, mit denen die Kurbelwelle (3) gegen eine über die Glattwalzrolle (7) auf die Kurbelwelle (3) wirkende Walzkraft abstützbar ist, wobei die Glattwalzrolle (7) in einem Rollenkäfig (12) allseitig geführt ist und der Glattwalzkopf (4) einen Glattwalzkopfrahmen (13) aufweist, in welchem das Glattwalzkopfgehäuse (6) um eine zu der Kurbelwellenachse (K) senkrechte zu einer Tangente an eine Arbeitsseite der Glattwalzrolle (7) parallele erste Schwenkachse (A) schwenkbar gelagert ist und der Stützrollenkopf (5) einen Stützrollenrahmen (14) aufweist, in welchem das Stützrollengehäuse (9) um eine zu der Kurbelwellenachse (K) senkrechte und zu der ersten Schwenkachse (A) parallele zweite Schwenkachse (B) und um eine zu der Kurbelwellenachse (K) senkrechte und zu der ersten Schwenkachse (A) senkrechte dritte Schwenkachse (C) schwenkbar gelagert ist, **dadurch gekennzeichnet,**
**dass** das Walzwerkzeug so ausgebildet ist, dass die erste Schwenkachse (A) beim Glattwalzen einer Lagerfläche einer Kurbelwelle als eine durch die Kurbelwelle (3) verlaufende Sekante ausgebildet ist, deren Abstand von der Tangente an die Arbeitsseite der Glattwalzrolle (7) kleiner als 10 Millimeter ist und dass die zweite Schwenkachse (B) als eine durch die Kurbelwelle (3) verlaufende Sekante ausgebildet ist, die durch Auflagepunkte oder nahe den Auflagepunkten der Kurbelwelle (3) auf den Stützrollen (10; 11) mit einer Abweichung von maximal 10 Millimetern verläuft.

2. Walzwerkzeug (1) nach Anspruch 1, **dadurch gekennzeichnet,**
**dass** der Rollenkäfig (12) eine streifenförmige Öffnung (17) aufweist, deren Breite auf einer dem Glattwalzkopf (4) abgewandten Seite des Rollenkäfigs (12) kleiner ist als der Durchmesser der Glattwalzrolle (7).

3. Walzwerkzeug (1) nach Anspruch 1, **dadurch gekennzeichnet,**
**dass** der Glattwalzkopf (4) und der Stützrollenkopf (5) durch wenigstens ein Kupplungselement mechanisch miteinander verbindbar sind.

4. Walzwerkzeug (1) nach Anspruch 3, **dadurch gekennzeichnet,**
**dass** das Kupplungselement ein am Stützrollenkopf (5) befestigter Bolzen (15) ist, der zum Eingreifen in eine Zentrierbohrung (16) im Glattwalzkopf (4) ausgebildet ist.

5. Walzwerkzeug (1) nach Anspruch 1, **dadurch gekennzeichnet,**
**dass** die Druckrolle (8) und die Stützrollen (10; 11) entsprechend einer zylindrischen, balligen oder konkaven Ausbildung der zu bearbeitenden Lagerfläche (2) zylindrische, konkave oder ballige Umfangsflächen aufweisen.

6. Walzwerkzeug (1) nach Anspruch 1, **dadurch gekennzeichnet,**
**dass** der Rollenkäfig (12) aus einer Bronze oder einem ungehärteten Stahl oder einem gehärteten Stahl besteht.

7. Walzwerkzeug (1) nach Anspruch 1, **dadurch gekennzeichnet,**
**dass** die Glattwalzrolle (7) aus einem gehärteten Stahl oder aus einem Hartmetall besteht.

## Claims

1. Rolling tool (1) for the finish rolling of bearing surfaces (2) of a crankshaft (3) rotatable about a crankshaft axis (K), having a finishing roller head (4) and a support roller head (5), the finishing roller head (4) having a finishing roller (7) and a pressure roller (8) which is mounted in a finishing roller head housing (6) and supports the finishing roller (7), with the support roller head (5) having two support rollers (10; 11) which are mounted in a support roller housing (9) by means of which the crankshaft (3) can be supported against a rolling force acting on the crankshaft (3) via the finishing roller (7), with the finishing roller (7) being guided on all sides in a roller cage (12) and the finishing roller head (4) having a finishing roller head frame (13), in which the finishing roller head housing (6) is mounted such that it is pivotable around a first pivot axis (A) which is perpendicular to the crankshaft axis (K) and parallel to a tangent on a working side of the finishing roller (7) and the support roller head (5) has a support roller frame (14) in which the support roller housing (9) is mounted such that it is pivotable around a second pivot axis (B) which is perpendicular to the crankshaft axis (K) and parallel to the first pivot axis (A) and around a third pivot axis (C) which is perpendicular to the crankshaft axis (K) and perpendicular to the first pivot axis (A), **characterized in that** the rolling tool is designed such that the first pivot axis (A) during finish rolling of a bearing surface of a crankshaft is designed as a secant which runs through the crankshaft (3) and whose distance from the tangent to the working side of the finishing roller (7) is less than 10 millimetres, and **in**
**that** the second pivot axis (B) is designed as a secant which runs through the crankshaft (3) and which is formed on the support rollers (10; 11) through the contact points or near the contact points of the crankshaft (3) with a maximum deviation of 10 millimetres.

2. Rolling tool (1) according to claim 1, **characterised in**
**that** the roller cage (12) has a strip-shaped opening (17) whose width on a side of the roller cage (12) facing away from the finishing roller head (4) is smaller than the diameter of the finishing roller (7).

3. Rolling tool (1) according to claim 1, **characterised in**
**that** the finishing roller head (4) and the support roller head (5) can be mechanically joined together by at least one coupling element.

4. Rolling tool (1) according to claim 3, **characterised in**
**that** the coupling element is a pin (15) which is attached to the support roller head (5) and which is designed to engage in a centring hole (16) in the finishing roller head (4).

5. Rolling tool (1) according to claim 1, **characterised in**
**that** the pressure roller (8) and the support rollers (10; 11) have cylindrical, concave or spherical peripheral surfaces corresponding to a cylindrical, spherical or concave shape of the bearing surface (2) to be processed.

6. Rolling tool (1) according to claim 1, **characterised in**
**that** the roller cage (12) consists of a bronze or an unhardened steel or a hardened steel.

7. Rolling tool (1) according to claim 1, **characterised in**
**that** the finishing roller (7) consists of a hardened steel or a hard metal.

## Revendications

1. Outil de laminage de finition (1) destiné au laminage de surfaces de palier (2) d'un vilebrequin (3) tournant autour d'un axe de vilebrequin (K) avec une tête de laminage de finition (4) et une tête de galet d'appui (5), la tête de laminage de finition (4) comportant un galet de laminage de finition (7) et un galet de pression (8) installé dans un logement pour tête de laminage de finition (6) et qui supporte le galet de laminage de finition (7) ; la tête de galet d'appui (5) comportant deux roues de contre-réaction (10, 11) qui se trouvent dans un logement pour roues de contre-réaction (9) et avec lesquels le vilebrequin (3) peut être appuyé contre la force de laminage agissant sur le vilebrequin (3) par le biais du galet de laminage de finition (7) ; le galet de laminage de finition (7) étant guidé sur tous les côtés dans un support à galet (12) et la tête de laminage de finition (4) comportant un cadre de galets de laminage de finition (13) dans lequel le logement pour tête de laminage de finition (6) est monté pour pouvoir pivoter autour d'un premier axe de pivotement (A) perpendiculaire à l'axe de vilebrequin (K) et parallèle à une tangente sur un côté actif du galet de laminage de finition (7) ; la tête de galet d'appui (5) comportant un cadre de roues de contre-réaction (14) dans lequel le logement pour roues de contre-réaction (9) est monté pour pivoter autour d'un deuxième axe de pivotement (B) perpendiculaire à l'axe de vilebrequin (K) et parallèle au premier axe de vilebrequin (A) ainsi qu'autour d'un troisième axe de pivotement (C) perpendiculaire à l'axe de vilebrequin (K) et perpendiculaire au premier axe de pivotement (A) ; **caractérisé par le fait**
**que** l'outil de laminage est conçu de telle façon que le premier axe de pivotement (A) forme, pendant le laminage de finition d'une surface de palier d'un vilebrequin, une sécante passant par le vilebrequin (3) dont la distance de la tangente au côté actif du galet de laminage de finition (7) est inférieure à 10 millimètres et
**que** le deuxième axe de pivotement (B) forme une sécante passant par le vilebrequin (3) et qui passe par les points d'appui ou à proximité des points d'appui du vilebrequin (3) sur les roues de contre-réaction (10, 11) avec un écart de 10 millimètres au maximum.

2. Outil de laminage (1) selon la revendication 1 **caractérisé par le fait**
**que** le support à galet (12) présente une ouverture (17) en forme de bande dont la largeur sur un côté du support à galet (12) opposé à la tête de laminage de finition (4) est inférieure au diamètre du galet de laminage de finition (7).

3. Outil de laminage (1) selon la revendication 1 **caractérisé par le fait**
**que** la tête de laminage de finition (4) et la tête de galet d'appui (5) peuvent être reliées l'une à l'autre de manière mécanique par au moins un élément d'accouplement.

4. Outil de laminage (1) selon la revendication 3 **caractérisé par le fait**
**que** l'élément d'accouplement est un boulon (15) fixé à la tête de galet d'appui (5) conçu de telle façon qu'il peut être vissé dans un trou de centrage (16) dans la tête de laminage de finition (4).

5. Outil de laminage (1) selon la revendication 1 **caractérisé par le fait**
**que** le galet de pression (8) et les roues de contre-réaction (10, 11) présentent des surfaces circonférentielles cylindriques, concaves ou bombées, conformément à une structure cylindrique, bombée ou concave de la surface de palier (2) à usiner.

6. Outil de laminage (1) selon la revendication 1 **caractérisé par le fait**
**que** le support à galet (12) est réalisé en bronze ou en acier non trempé ou en acier trempé.

7. Outil de laminage (1) selon la revendication 1, **caractérisé par le fait**
**que** le galet de laminage de finition (7) est réalisé en acier trempé ou en métal dur.
